(19) Europäisches Patentamt
European Patent Office
Office européen des brevets

(11) **EP 2 682 315 A1**

(12) **EUROPEAN PATENT APPLICATION**

(43) Date of publication:
**08.01.2014 Bulletin 2014/02**

(51) Int Cl.:
*B60S 1/08* *(2006.01)*  *H04N 5/357* *(2011.01)*
*H04N 5/14* *(2006.01)*  *H04N 5/225* *(2006.01)*

(21) Application number: **13174750.3**

(22) Date of filing: **02.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.07.2012 JP 2012149539**

(71) Applicant: **Clarion Co., Ltd.**
**Saitama 330-0081 (JP)**

(72) Inventors:
• **Nakamura, Katsuyuki**
  **Tokyo, 100-8220 (JP)**
• **Irie, Kota**
  **Saitama, 330-0081 (JP)**
• **Kiyohara, Masahiro**
  **Tokyo, 100-8220 (JP)**

(74) Representative: **Ahner, Philippe**
  **BREVALEX**
  **95 rue d'Amsterdam**
  **75378 Paris Cedex 8 (FR)**

(54) **A diagnosis device for a vehicle mounted dirt removal device, a diagnosis method and a vehicle system**

(57) A diagnosis device (1, 1a, 1b) of a dirt removal device for removing dirt of a vehicle mounted camera, including a characteristic quantity extraction part (4, 4a) that extracts a characteristic quantity of the image of a particular area photographed by the vehicle mounted camera (10), a change determination part (5, 5a) that determines a degree of changes through time series of the extracted characteristic quantity, and a diagnosis part (6, 6a) that diagnoses whether the dirt removal device of vehicle mounted camera is operating normally or abnormally, when the dirt removal device implements a dirt removal operation of the lens surface, based on whether operating signals outputted are inputted and whether the degree of changes of the characteristic quantity inputted from the changes determination part (5, 5a) is set to below or above a set threshold value.

# FIG.1

## Description

The present invention relates to a diagnosis device for a vehicle mounted dirt removal device, a diagnosis method and a vehicle system that diagnoses whether or not a normal state is maintained in a camera dirt removal device removing dirt of a lens surface of a vehicle mounted camera (for example, back camera or the like).

Description of Related Art

In recent years, in order to support driving of a driver, at least one direction among a front, a back and both sides of a vehicle itself or all round directions are photographed by a vehicle mounted camera. Photographed images are displayed on a monitor screen. A vehicle mounted camera device as such is gradually coming into wide use. For example, the vehicle mounted camera disposed on the vehicle rear (back camera) is used to photograph a rear side of the vehicle. The photographed image is displayed on a monitor screen. In such a vehicle mounted camera device, parking assistance support of the driver, detections of subsequent vehicle closing up from adjacent lanes behind as well as detections of a pedestrian closing up can be possible.

On the other hand, the vehicle mounted camera of a back camera or the like is mounted externally to a vehicle. Therefore, attachments such as rain droplets and dirt etc. can easily stick to the lens surface (including a surface protection glass etc.) If such sticking occurs, image quality photographed by the vehicle mounted camera deteriorates such that as a measure, high pressure water and air are sprayed to the lens surface to remove sticking of rain droplets and dirt etc. attached to the lens surface. Such technologies are known conventionally. (For example, refer to JP2001-171491A)

By the way, like JP2001-171491A, in a vehicle mounted camera dirt removal device that removes attachments by spraying high pressure water and air to the lens surface, for example, there is concern of failure of spraying washer liquids when pipe conduit is jammed midway due to freezing or adhesion of alien substances etc., the pipe conduit for flow through of high pressure water.

Therefore, if, for example, the vehicle mounted camera is a back camera disposed at vehicle rear, the driver inside the vehicle may not notice such abnormal operations where the high pressure water as described above is not sprayed. As a result, even when abnormal operations are occurring, if operations are implemented to command high pressure water to be sprayed, the following circumstances are at risk to occur. For example, a motor for spraying use may be burned due to heavy load, water can reversely flow back the pipe conduit such that a print circuit or the like of the dirt removal device for vehicle mounted camera can be wetted.

Therefore, an object of the present invention is to provide a diagnosis device for the dirt removal device of the vehicle mounted camera, a diagnosis method thereof and a vehicle system included in the diagnosis device. In this invention, whether the dirt removal device of the vehicle mounted camera that removes dirt of the lens surface is operating normally or abnormal malfunctions are generated therein can be diagnosed easily and precisely.

In order to achieve such an object, in a diagnosis device according to the present invention that diagnoses whether normal operation is maintained or not to a dirt removal device of a vehicle mounted camera, the dirt removal device removes dirt on a lens surface of the vehicle mounted camera, the following constitutions are included. Specifically, a characteristic quantity extraction part that extracts a characteristic quantity of the image of a particular area photographed by the vehicle mounted camera, a change determination part that determines the degree of changes through time series of the extracted characteristic quantity, and a diagnosis part. Based on determinations of whether there is input of operation signals outputted, when a dirt removal operation for the lens surface by the dirt removal device of the vehicle mounted camera is ongoing, and based on determinations of whether the degree of changes of the characteristic quantity inputted from the change determination part is above or below the set threshold value, normal operation or abnormal operation of the dirt removal device for the vehicle mounted camera is diagnosed by the diagnosis part.

In addition, in the diagnosis method according to the present invention, diagnosis is made to whether the dirt removal device of the vehicle mounted camera removing dirt on lens surface of the vehicle mounted camera is operating normally or not. In such a diagnosis method, the following steps are constituted. Specifically, a particular quantity extraction step that extracts a characteristic quantity of the image of a particular area photographed by the vehicle mounted camera, a degree of changes determination step that determines the degree of changes at time series of the extracted particular quantity. When the vehicle mounted camera dirt removal device is performing dirt removal operation of the lens surface, during such ongoing operation, whether there is input signals from operation signals outputted and whether the degree of changes of the particular quantity inputted from the changes determination step is above or below a set preliminary value are determined. Based on such determinations, a diagnosis step is performed to diagnose whether the dirt removal device of the vehicle mounted camera is in normal operation or abnormal operation.

In addition, the vehicle mounted system according to the present invention includes a vehicle mounted camera, a dirt removal device of the vehicle mounted camera that removes dirt of lens surface of the vehicle mounted camera, a diagnosis device according to the present invention that diagnoses whether the dirt removal device of the vehicle mounted camera is operating normally. Furthermore, the diagnosis device includes a control part inputted with diagnosis information from the diagnosis part, when diagnosis information of the dirt removal device of the vehicle mounted camera operating abnormally is inputted, the control part outputs stop signal to the dirt removal device of the vehicle mounted camera, operations of the dirt removal device of the vehicle mounted camera are stopped.

[Effects of the invention]

The diagnosis device of the dirt removal device of the vehicle mounted camera and diagnosis method as well as vehicle system according to the present invention can easily and accurately diagnoses whether the dirt removal device of the vehicle mounted camera that removes the dirt of lens surface of the vehicle mounted camera is operating normally or abnormal operations are generated.

FIG. 1 is a block diagram that illustrates an approximate constitution of a diagnosis device which diagnoses a dirt removal device of a vehicle mounted camera according to an embodiment of the present invention.

FIG. 2 is a diagram that illustrates a vehicle mounted camera (back camera) disposed on the vehicle.

FIG. 3A is a diagram that illustrates an example of an image photographed by the vehicle mounted camera.

FIG. 3B is a diagram that illustrates parts (a processing area) of the vehicle pictured in within this image, the parts pictured in divided into blocks in this state.

FIG. 4 is a flow chart that illustrates a diagnosis processing action of the diagnosis device in embodiment 1.

FIG. 5A is a diagram that illustrates an example of time series information of an average contrast calculated out.

FIG. 5B is a diagram that illustrates averages and variances of the times series information of this average contrast.

FIG. 6 is a diagram that illustrates an example of the time series information of the average contrast calculated out.

FIG. 7 is a block diagram that illustrates an approximate constitution of a diagnosis device which diagnoses a dirt removal device of a vehicle mounted camera according to embodiment 2 of the present invention.

FIG. 8 is a flow chart that illustrates a diagnosis processing action of the diagnosis device in embodiment 2.

FIG. 9A is a diagram that illustrates an example of time series information of an average edge strength calculated out.

FIG. 9B is a diagram that illustrates averages and variances of the times series information of this average edge strength.

FIG. 10 is a diagram that illustrates an example of time series information of the average contrast calculated out.

FIG. 11 is a block diagram that illustrates an approximate constitution of a diagnosis device which diagnoses a dirt removal device of a vehicle mounted camera according to embodiment 3 of the present invention.

FIG. 12 is a flow chart that illustrates a diagnosis processing action of the diagnosis device in embodiment 3.

FIG. 13 is a block diagram that illustrates an approximate constitution of a vehicle system according to an embodiment 4 of the present invention.

Hereinbelow, the present invention is described based on the illustrated embodiment 1.

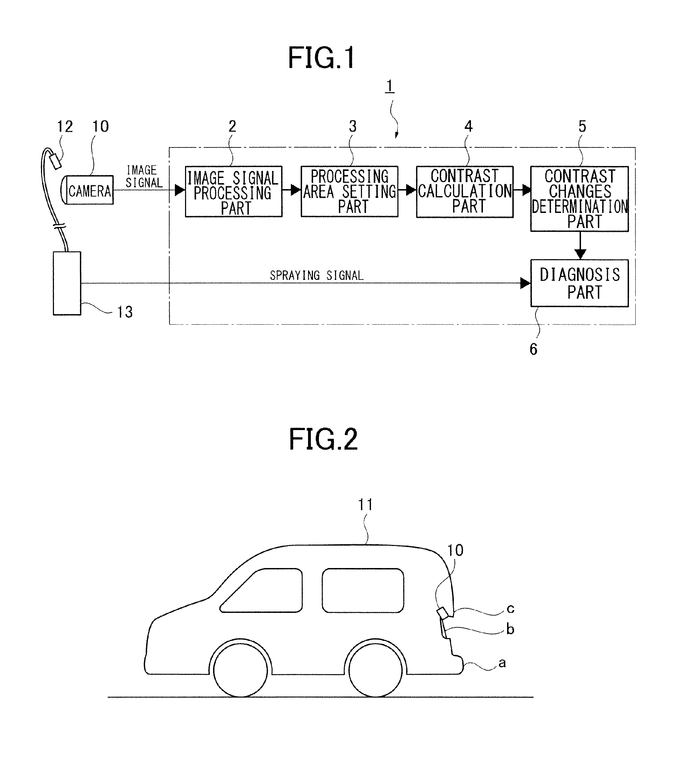

FIG. 1 is a block diagram that illustrates an approximate constitution of a diagnosis device which diagnoses a dirt removal device of a vehicle mounted camera according to Embodiment 1 of the present invention.

As illustrated in FIG. 1, the diagnosis device 1 of the present embodiment includes an image signal processing part 2, a processing area setting part 3, a contrast calculation part 4, a contrast changes determination part 5, and a diagnosis part 6.

The image signal processing part 2 takes in image signals outputted from a vehicle mounted camera 10. The image signal processing part 2 generates image data after predetermined image signal is processed.

The vehicle mounted camera 10, in the embodiment 1, for example as illustrated in FIG. 2, is disposed in a rear part of the vehicle (automobile) 11. It is a back camera that photographs a rear side of the vehicle itself. Image signals outputted from this vehicle mounted camera (back camera) 10 are inputted to a navigation device (not illustrated hereby) inside the vehicle and to an image signal processing part 2 of the diagnosis device 1.

In addition, as illustrated in FIG. 1, in the vehicle 11, a dirt removal device 13 for the vehicle camera is disposed to remove attachments of water droplets or dirt etc. attached to a lens surface of the vehicle mounted camera (back camera) 10 during running etc. The removal is made by high pressure water sprayed from a nozzle 12 (hereinbelow termed washer liquid).

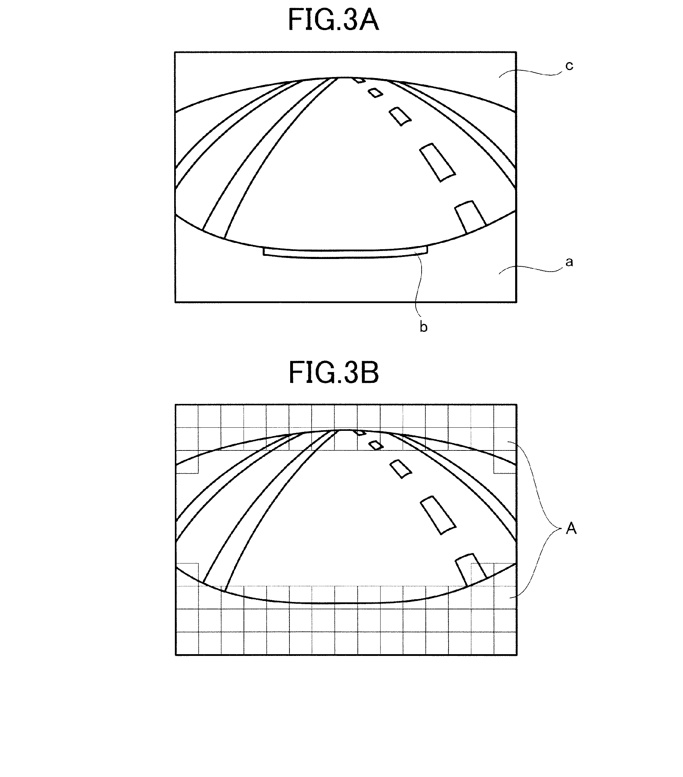

The processing area setting part 3 sets a predetermined processing area used for diagnosis of image data generated from the image signal processing part 2. To be more specific, super wide angle lens is used for the back camera as the vehicle mounted camera 10. For example, image data as illustrated in FIG. 3A can be obtained (image data curving in the rear area including the rear end part of the vehicle itself).

The image illustrated in FIG. 3A includes pictured in parts of the rear part of the vehicle itself (a rear bumper a, a license plate b, a finisher c (illustrated in FIG. 2) etc.) as well as road surface and side belt etc. of the rear side. In such an image (video), an imaged state of road surface or the like varies greatly together with vehicle running. But the parts of the vehicle itself pictured in (a rear bumper a, a license plate b, a finisher c etc.) can be handled as still image areas regardless of running conditions. Therefore, they are proper as processing areas of a high accuracy and stability.

In addition, in the case a lens hood is installed on an upper part of a lens tip edge side of the vehicle mounted camera 10, the lens hood can also be pictured in, serving as a still image area within the image.

Therefore, in the embodiment 1, as illustrated in FIG. 3B, the above described still image area is set as a processing area A. This processing area A is divided into blocks. In such a way, the processing area setting part 3 selects still image areas from image data generated at image signal processing part 2 regardless of running conditions and sets as targeted processing area (parts pictured in of the vehicle itself such as a rear bumper a, a license plate b, a finisher c etc).

In addition, in the case that an installing position, an angle thereof and an angle of view of the vehicle mounted camera 10 are preliminarily clarified, the above described still image areas within the photographed image can be grasped rapidly and set (a rear bumper a, a license plate b, a finisher c etc.)

The contrast calculation part (characteristic quantity extraction part) 4 calculates contrast of each block area divided by the processing area A. Average contrast at the processing area A is calculated from contrast of each block area. Furthermore, averages and variances are calculated from time series data of this average contrast.

The contrast changes determination part 5 determines the degree of changes of the average contrast through time series based on contrasts and variances of the average contrast at the time series in the processing area A calculated out. (Details of which are later described).

Spray signals (action signals) are outputted when washer fluids are sprayed to the lens surface of the vehicle mounted camera (back camera) 10. When such signal is inputted to the dirt removal device 13 of the vehicle mounted camera, the diagnosis part 6 determines (diagnose) the dirt removal device 13 of the vehicle mounted camera to be a normal state if the degree of contrast changes determined by the contrast changes determination part 5 surpass a predetermined threshold value. The diagnosis part 6 determines (diagnose) the dirt removal device 13 of the vehicle mounted camera to be a abnormal state if the degree of contrast changes determined by the contrast changes determination part 5 is less than a predetermined threshold value (details are later described).

(Diagnosis processing actions of the diagnosis device)

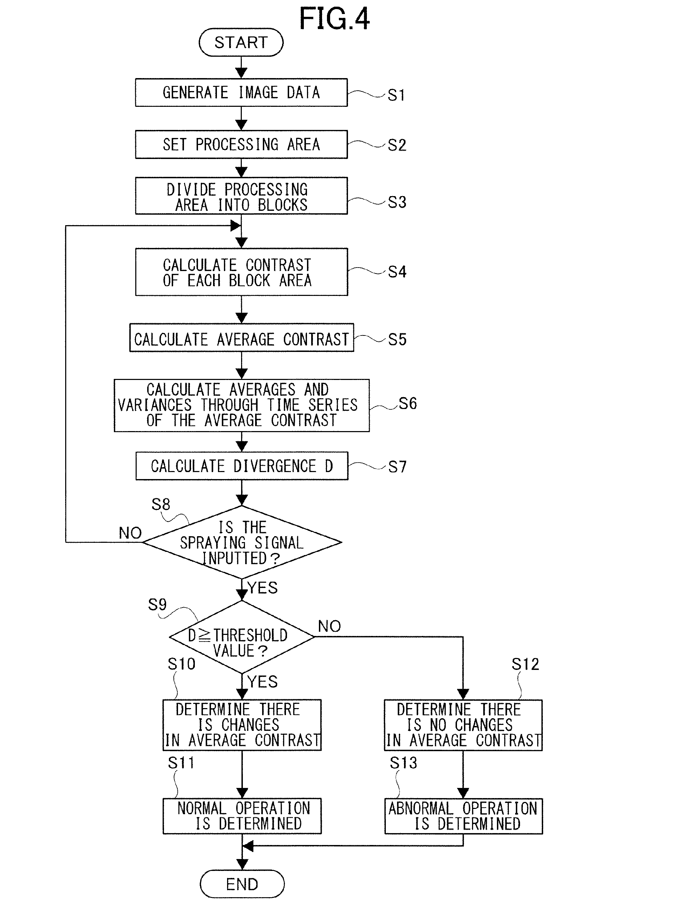

Next, diagnosis processing actions of the diagnosis device 1 of embodiment 1 is described with reference to the flow chart illustrated in FIG. 4.

The image signal processing part 2 takes in image signals outputted from the vehicle mounted camera 10, performs predetermined image signal processing and generates image data (step S1).

Then the processing area setting part 3, selects a still image area (parts pictured in of the vehicle itself such as a rear bumper a, a license plate b, a finisher c etc) as described above from image data generated at the image signal processing part 2 and illustrated in, for example FIG. 3A. The still image area is set as the processing area A (step S2). Then, as illustrated in FIG. 3B, the processing area A set such is divided into blocks (step S3).

Then the contrast calculation part 4 calculates out contrasts of each divided blocks of the processing area A (step S4) and furthermore, calculates out the average contrast through time series at the processing area A from contrasts of each divided blocks.

When calculating the average contrast at processing area A, block areas with a contrast size below a preliminarily set threshold value are excluded. The average contrast is calculated using contrasts of other block areas. In such a way, great variations in size of average contrast calculated by time series can be suppressed.

In a situation which for example, a partial area of the rear bumper a at processing area A is flat. Or if spot reflections of sunlight and light (head light of subsequent vehicles at night time etc.) to partial areas of the rear bumper a are non consecutive, luminosity of those reflective parts can change greatly. Such cases etc. are listed as a situation in which contrast of a block area is below the preliminarily set threshold value.

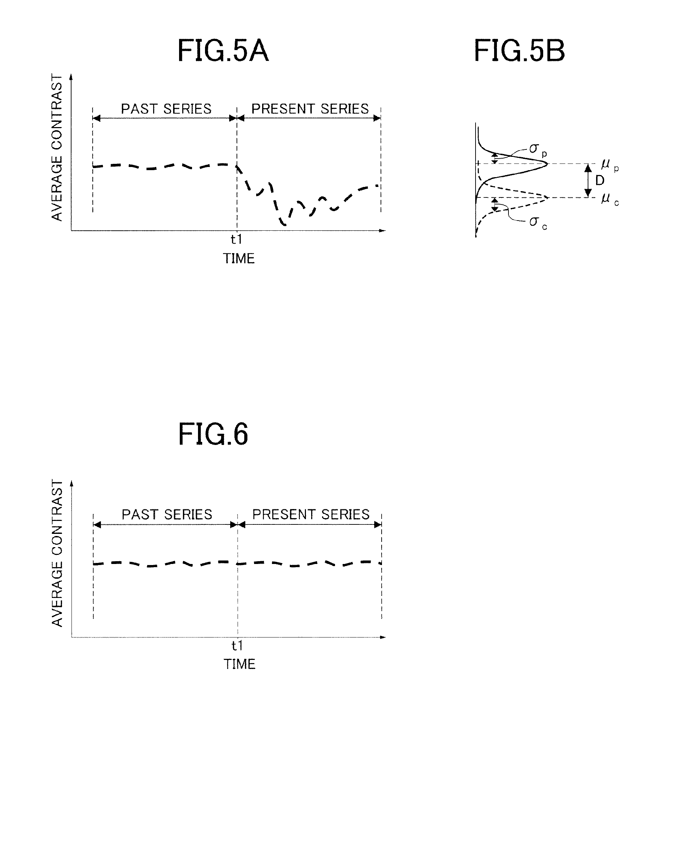

In addition, time series information of the average contrast calculated out is stored in a buffer memory. Time series information of the average contrast stored in this buffer memory, for example, as illustrated in FIG. 5A and FIG. 6 is divided to past series and present series with one moment t1 as a benchmark. For example, as illustrated in FIG. 5A, size of the average contrast through time series is in a circumstance greatly decreasing after the moment t1. In FIG. 6, size of the average contrast through time series is in a circumstance transiting within a predetermined range. In addition, in FIG. 5A, FIG. 6, for example, if a buffer of the average contrast is set to 6 seconds, past series and present series with the moment t1 as the benchmark have 3 seconds for each. In addition, an interval for calculating average contrast is for example 0.5 seconds.

In FIG. 5A, at the moment t1, washer liquid is sprayed to a lens surface of a nozzle 12 of the dirt removal device 13 of the vehicle mounted camera, rain droplets and dirt etc. attached thereon to the lens surface is removed by a dirt removal action implemented hereby. By this dirt removal action, in the couple seconds immediately after the washer liquid is sprayed to the lens surface of the vehicle mounted camera 10, due to influences of the washer liquid on the lens surface, average contrast of the processing area A temporarily decreases greatly.

In addition, the washer liquid falls in a gravitational direction from the lens surface. Therefore, after couple seconds, the average contrast returns to the size before the moment t1. At the moment t1, if washer liquid is sprayed to the lens surface of the vehicle mounted camera 10 by the nozzle 12 of the dirt removal device 13 of the vehicle mounted camera, spray signal (ON signal) is outputted from the dirt removal device 13 of the vehicle mounted camera to the diagnosis part 6 at this moment t1.

FIG. 6 is a time series transition of the average contrast in a situation which the washer liquid is not sprayed to the lens surface of vehicle mounted camera 10 from the nozzle 12 of the dirt removal device 13. The average contrast does not greatly decrease like that of FIG. 5A.

A timing at which the washer liquid is sprayed to the lens surface of vehicle mounted camera 10 from the nozzle 12 of the dirt removal device 13 is as follows. For example, in the case a sensor is disposed to detect the degree of dirt on the lens surface of the vehicle mounted camera 10, the timing is at when the signal are inputted from this sensor. In addition, if there is a washer liquid spraying switch for spraying the washer liquid, the timing is at when the washer liquid spraying switch is turned ON by the driver.

Furthermore, if a washer liquid spraying mechanism for the rear wiper is present, the washer liquid can be sprayed to the lens surface from the nozzle 12 of the dirt removal device 13 of the vehicle mounted camera in connection with when washer liquid is sprayed to the rear wiper from the washer liquid spraying mechanism by operations of the driver.

In addition, the contrast changes determination part 5, against time series (past series, present series) data of the average contrast as illustrated in FIG. 5A, averages ($\mu$p, $\mu$c) and variances ($\sigma$p$^2$, $\sigma$c$^2$) of the average contrast are calculated out as illustrated in FIG. 5B (step S6). That is, $\mu$p and $\mu$c are respectively averages of the past series and the present series. $\sigma$p$^2$ and $\sigma$c$^2$ are respectively variances of the past series and the present series.

Then, from averages ($\mu$p, $\mu$c) and variances ($\sigma$p$^2$, $\sigma$c$^2$) of these average contrasts, a divergence indicating the degree of the average contrast is calculated (step S7). This divergence D is calculated by the following equation (1).

$$D = (\mu c - \mu p)^2 / 2\sigma^2 \quad \text{... equation (1)}$$

However, hereby $\sigma = \sigma$p.

Then the diagnosis part 6 determines whether or not the spraying signal (ON signal) outputted at the time of spraying the washer liquid from the dirt removal device 13 of the vehicle mounted camera at this moment is inputted or not (step S8). Then in the case if the spraying signal is determined to be inputted at step S8 (YES in step S8), the value of divergence D calculated at step S7 is determined to be whether or not above the preliminarily set threshold value (step S9).

Then if the value of divergence D calculated at step S9 is determined to be above the preliminarily set threshold value (YES in step S9), the average contrast at the present series is determined to have changed greatly as illustrated in FIG. 5A (the average contrast is determined to have changed, step S10). The dirt removal device 13 of the vehicle mounted camera is diagnosed to have operated normally without any malfunctions based on this determination (step S11).

On the other hand, if the value of divergence D calculated at step S9 is determined to be below the preliminarily set threshold value (NO in step S9), the average contrast at the present series is determined to have not changed as illustrated in FIG. 6 (average contrast is determined to have not changed, step S12). The dirt removal device 13 of the vehicle mounted camera is diagnosed to have not operated normally based on this determination (step S13) in which the washer liquid from the nozzle 12 of the dirt removal device 13 of the vehicle mounted camera is not sprayed.

That is, as illustrated in FIG. 6, when the average contrast of the present series is determined to not have changed from the past series (the average contrast is determined to have no changes), the washer liquid from the nozzle 12 of the dirt removal device 13 of the vehicle mounted camera is not sprayed to the lens surface of the vehicle mounted camera 10 in such a case.

However, the spray signal is inputted to the diagnosis part 6 from the dirt removal device 13 of the vehicle mounted camera, in a normal circumstance the washer liquid will be sprayed. But if some kind of abnormality is present to the dirt removal device 13 of the vehicle mounted camera (for example, if a pipe conduit leading to the nozzle 12 is jammed, or if the washer liquid in storage is empty, or if the washer liquid is freezing due to low temperature), the washer liquid is not sprayed.

Therefore, as illustrated in FIG. 6, when the average contrast of the present series is determined to not have changed from the past series, in such a case if the spraying signal from the dirt removal device 13 of the vehicle mounted camera is determined to be inputted, diagnosis can be made in that the washer fluid is not sprayed from the nozzle 12 of the dirt removal device 13 of the vehicle mounted camera. Such state is determined as abnormal operations (step S12, S13).

In addition, as illustrated in step S8, in the case the spraying signal is not inputted (NO in step S8), it is returned to step S4, the process operations as described above is repeated hereafter.

In addition, in the case normal operation is diagnosed (determined) in step S11, or abnormal operation is diagnosed (determined) in step S13, implementation of the process operations illustrated in FIG. 4 is repeated a plurality of times. In such a way, reliability of diagnosis results of step S11, step S13 can be further heightened (mistakes in determination can be prevented).

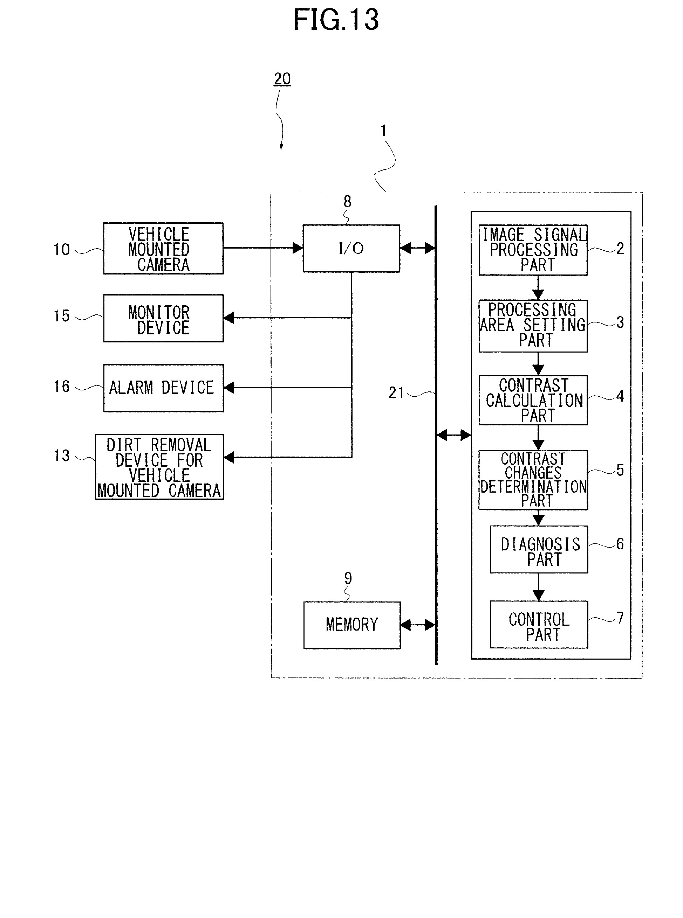

Then the diagnosis part 6 outputs determination information at step S11, S13 (normal operation determination information or abnormal operation determination information) to a control part of the diagnosis device 1 (refer to the diagnosis device 1 of embodiment 4 as illustrated in FIG. 13). In the case if the abnormal operation determination information is inputted to this control part, for example, spraying of the washer liquid is stopped, or a hazard lamp is lighted up (or flashed) to indicate the malfunction of the dirt removal device 13 of the vehicle mounted camera. The diagnosis part 6 outputs such signals to notify the driver.

In such a way, the diagnosis device 1 diagnosing the dirt removal device 13 of the vehicle mounted camera of the embodiment 1, during running of the vehicle (including when the vehicle is stopped), if the dirt removal device 13 of the vehicle mounted camera performs an operation to spray the washer fluid to the lens surface of the vehicle camera 10, in the case an abnormality is present in which the washer fluid is not sprayed from the nozzle 12, easy and precise diagnosis of the abnormal operation for the not sprayed washer fluid can be made.

(Embodiment 2)

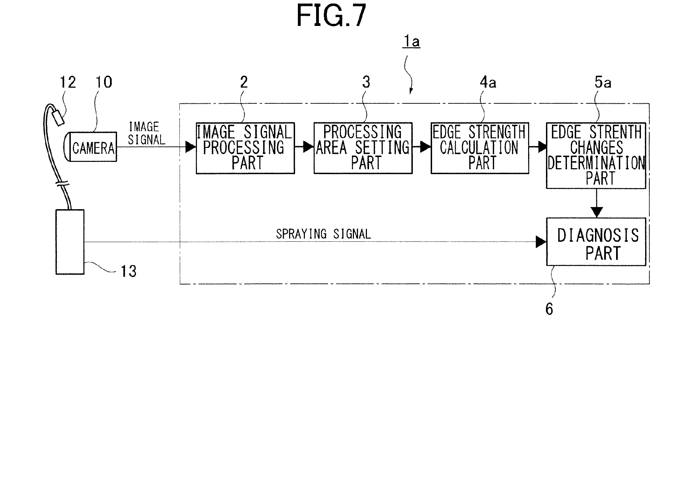

FIG. 7 is a block diagram that illustrates an approximate constitution of a diagnosis device which diagnoses a dirt removal device of a vehicle mounted camera according to Embodiment 2 of the present invention. In addition, same numerals are assigned to constituent parts with the same functions as the diagnosis device of Embodiment 1 as illustrated in FIG. 1 and overlapping descriptions are hereby abbreviated.

(Constitution of the diagnosis device)

As illustrated in FIG. 7, the diagnosis device 1a of the embodiment 2 includes an image signal processing part 2, a process area setting part 3, an edge strength calculation part (characteristic quantity extraction part) 4a, an edge strength change determination part 5a, and a diagnosis part 6. The constitutions of the image signal processing part 2 and the process area setting part 3 are the same with embodiment 1.

The edge strength calculation part (characteristic quantity extraction part) 4a, calculates edge strengths of block areas in correspondence to a frontier part of the process areas A of for example, the above described FIG. 3B (parts of the vehicle pictured in such as a rear bumper a, a license plate b, a finisher c (illustrated in FIG. 2) etc.). Edge strengths can be detected stably in such a frontier part of the pictured in parts of the vehicle itself. Each block area of this frontier part is selected to calculate edge strength.

Furthermore, the edge strength calculation part (characteristic quantity extraction part) 4a calculates an average edge strength from edge strengths of each block area at the frontier part. Furthermore, averages and variances are calculated from time series data of this average edge strength.

An edge strength change determination part 5a determines the degree of changes through time series of the average edge strength based on averages and variances through time series of the average edge strength calculated out.

Spray signals (action signals) are outputted when washer fluids are sprayed to the lens surface of the vehicle mounted camera (back camera) 10. When such signal is inputted to the dirt removal device 13 of the vehicle mounted camera, the diagnosis part 6 determines (diagnose) the dirt removal device 13 of the vehicle mounted camera to be a normal state if the degree of contrast changes determined by the contrast changes determination part 5 surpass a predetermined threshold value. The diagnosis part 6 determines (diagnose) the dirt removal device 13 of the vehicle mounted camera to be a abnormal state if the degree of contrast changes determined by the contrast changes determination part 5 is less than a predetermined threshold value (details are later described).

(Diagnosis processing actions of the diagnosis device)

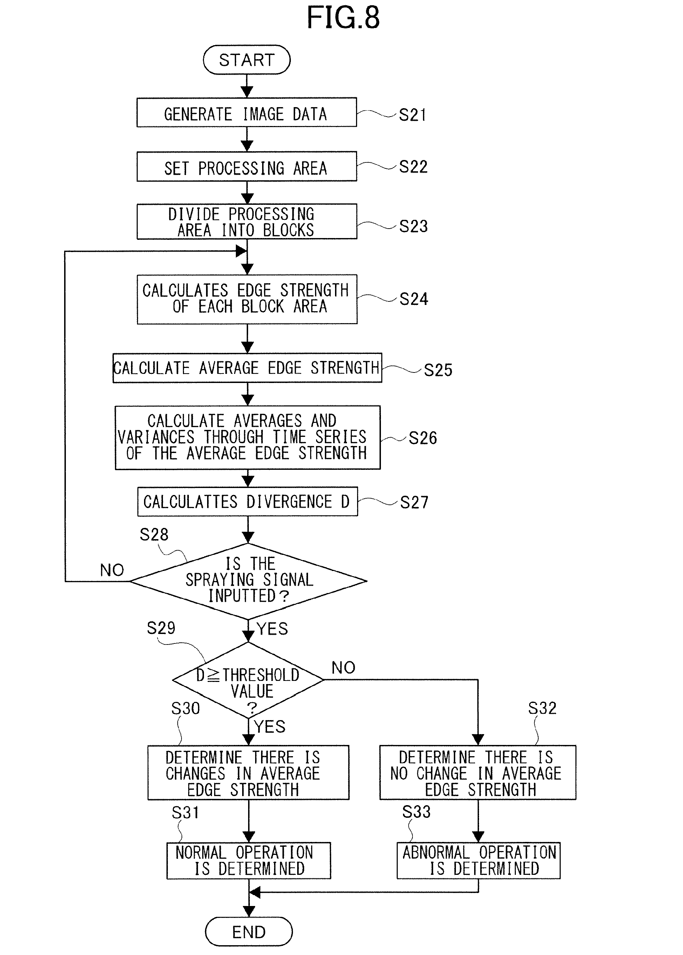

Next, diagnosis processing actions of the diagnosis device 1a of embodiment 2 is described with reference to the flow chart illustrated in FIG. 8.

The image signal processing part 2 takes in image signals outputted from the vehicle mounted camera 7, performs predetermined image signal processing and generates image data (step S21).

Then the processing area setting part 3, selects a still image area (parts pictured in of the vehicle itself such as a rear bumper a, a license plate b, a finisher c etc) as described above from image data generated at the image signal processing part 2 and illustrated in, for example FIG. 3A. The still image area is set as the processing area A (step S22). Then, as illustrated in FIG. 3B, the processing area A set such is divided into blocks (step S23).

Then the contrast calculation part (characteristic quantity extraction part) 4 calculates out edge strengths of each divided blocks corresponding to a frontier part (for example, a frontier part between the rear bumper a and the road surface) of the processing area A (step S24) and furthermore, calculates out the average edge strength through time series at the processing area A from edge strengths of each block areas (step S25).

When calculating the above described average edge strength, the edge strength of block areas with edge strengths below a preliminarily set threshold value is excluded. The average edge strength is calculated using edge strengths of other block areas. In such a way, great variations in size of edge strengths calculated by time series can be suppressed.

In a situation which for example, a partial area of the rear bumper a at processing area A is flat. Or, if spot reflections of sunlight and light (head light of subsequent vehicles at night time etc.) to partial areas of the rear bumper a are non consecutive, luminosity of those reflective parts can change greatly. Such cases etc. are listed as situations in which edge strength of a block area is below the preliminarily set threshold value.

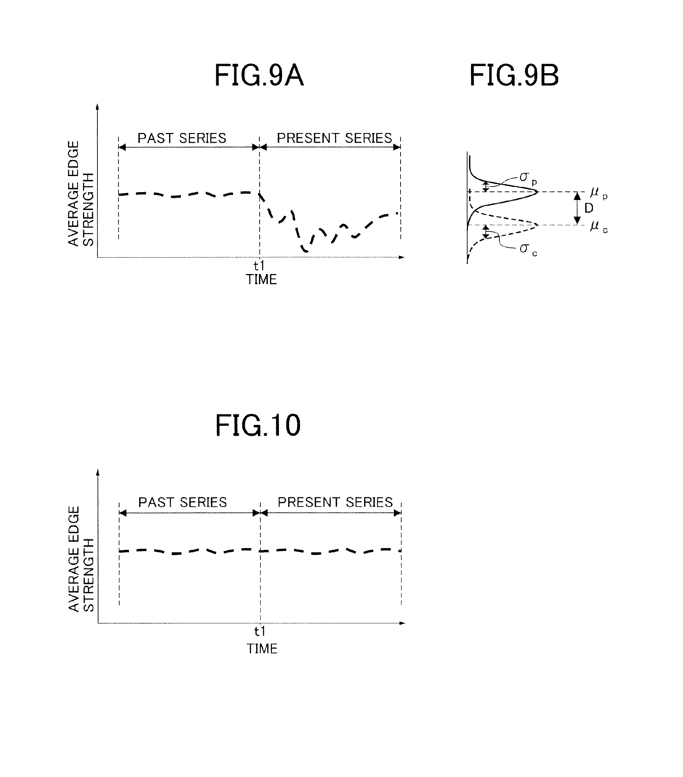

In addition, time series information of the average edge strength calculated out is stored in a buffer memory. Time series information of the average edge strength stored in this buffer memory, for example, as illustrated in FIG. 9A and FIG. 10 is divided to past series and present series with one moment t1 as a benchmark. For example, as illustrated in FIG. 9A, size of the average edge strength through time series is in a circumstance greatly decreasing after the moment t1. In FIG. 10, size of the average edge strength through time series is in a circumstance transiting within a predetermined range. In addition, in FIG. 9A, FIG. 10, for example, if a buffer of the average edge strength is set to 6 seconds, past series and present series with the moment t1 as the benchmark have 3 seconds for each. In addition, an interval for calculating average edge strength is for example 0.5 seconds.

In FIG. 9A, at the moment t1, washer liquid is sprayed to a lens surface of a nozzle 12 of the dirt removal device of the vehicle mounted camera 13, rain droplets and dirt etc. attached thereon to the lens surface is removed by a dirt removal action implemented. By this dirt removal action, in the couple seconds immediately after the washer liquid is sprayed to the lens surface of the vehicle mounted camera 10, due to influences of the washer liquid on the lens surface, average edge strength of the processing area A temporarily decreases greatly.

In addition, the washer liquid falls in a gravitational direction from the lens surface. Therefore, after couple seconds, the average edge strength returns to the size before the moment t1. At the moment t1, if washer liquid is sprayed to the lens surface of the vehicle mounted camera 10 by the nozzle 12 of the dirt removal device 13 of the vehicle mounted camera, spray signal (ON signal) is outputted from the dirt removal device 13 of the vehicle mounted camera to the diagnosis part 6 at this moment t1.

FIG. 10 is a time series transition of the average edge strength in a situation which the washer liquid is not sprayed to the lens surface of vehicle mounted camera 10 from the nozzle 12 of the dirt removal device 13. The average edge strength does not greatly decrease like that of FIG. 5A.

In addition, the edge strength changes determination part 5a, against time series (past series, present series) data of the average edge strength as illustrated in FIG. 9A, averages ($\mu$p, $\mu$c) and variances ($\sigma$p$^2$, $\sigma$c$^2$) of the average contrast are calculated out as illustrated in FIG. 9B (step S26). That is, $\mu$p and $\mu$c are respectively averages of the past series and the present series. $\sigma$p$^2$ and $\sigma$c$^2$ are respectively variances of the past series and the present series.

Then, from averages ($\mu$p, $\mu$c) and variances ($\sigma$p$^2$, $\sigma$c$^2$) of these average edge strengths, a divergence indicating the degree of changes of the average edge strength is calculated (step S27). This divergence D is calculated by the following formula (2).

$$D = (\mu c - \mu p)^2 / 2\sigma^2 \quad \text{... equation (2)}$$

However, hereby $\sigma = \sigma$p.

Then the diagnosis part 6 determines whether or not the spraying signal (ON signal) outputted at the time of spraying the washer liquid from the dirt removal device 13 of the vehicle mounted camera at this moment is inputted or not (step S28). Then in the case if the spraying signal is determined to be inputted at step S8 (YES in step S28), the value of divergence D calculated at step S27 is determined to be whether or not above the preliminarily set threshold value (step S29).

Then if the value of divergence D calculated at step S29 is determined to be above the preliminarily set threshold value (YES in step S29), average edge strength at the present series is determined to have changed greatly as illustrated in FIG. 9A (average edge strength is determined to have changed, step S30). The dirt removal device 13 of the vehicle mounted camera is diagnosed to have operated normally without any malfunctions based on this determination (step S31).

On the other hand, if the value of divergence D calculated at step S29 is determined to be below the preliminarily set threshold value (NO in step S29), average edge strength at the present series is determined to have not changed as illustrated in FIG. 10 (average edge strength is determined to have not changed, step S32). The dirt removal device 13 of the vehicle mounted camera is diagnosed to have operated abnormally based on this determination (step S33) in which the washer liquid from the nozzle 12 of the dirt removal device 13 of the vehicle mounted camera is not sprayed.

That is, as illustrated in FIG. 10, when the average edge strength of the present series is determined to not have changed from the past series (the average edge strength is determined to have no changes), the washer liquid from the nozzle 12 of the dirt removal device 13 of the vehicle mounted camera is not sprayed to the lens surface of the vehicle mounted camera 10 in such a case.

However, the spray signal is inputted to the diagnosis part 6 from the dirt removal device 13 of the vehicle mounted camera, in a normal circumstance the washer liquid will be sprayed. But if some kind of abnormality is present to the dirt removal device 13 of the vehicle mounted camera (for example, if a pipe conduit leading to the nozzle 12 is jammed, or if the washer liquid in storage is empty, or if the washer liquid is freezing due to low temperature), the washer liquid is not sprayed.

Therefore, as illustrated in FIG. 10, when the average edge strength of the present series is determined to not have changed from the past series, in such a case if the spraying signal from the dirt removal device 13 of the vehicle mounted camera is determined to be inputted, diagnosis can be made in that the washer fluid is not sprayed from the nozzle 12 of the dirt removal device 13 of the vehicle mounted camera. Such state is determined as abnormal operations (step S32, S33).

In addition, in step S28, in the case the spraying signal is not inputted (NO in step S28), the processing is returned to before S24, the above described following processing operations are repeated.

In addition, if normal operation is determined by step S31, or abnormal operation is determined by step S33, the processing operations as illustrated in FIG. 8 are implemented in repetition for a plurality number of times. Therefore, reliability of determination results (diagnosis results) at step S31, S33 can be heightened (erroneous determination can be prevented)

Then the diagnosis part 6 outputs determination information at step S31, S33 (normal operation determination information or abnormal operation determination information) to a control part of the diagnosis device 1a (refer to the diagnosis device 1 of embodiment 4 as illustrated in FIG. 13). In the case if the abnormal operation determination information is inputted to this control part, for example, a hazard lamp is lighted up (or flashed) to indicate the malfunction of the dirt removal device 13 of the vehicle mounted camera. The diagnosis part 6 outputs such signals to notify the driver.

In such a way, the diagnosis device 1 diagnosing the dirt removal device 13 of the vehicle mounted camera of the embodiment 2, during running of the vehicle (including when the vehicle is stopped), if the dirt removal device 13 of the vehicle mounted camera performs an operation to spray the washer fluid to the lens surface of the vehicle camera 10, in the case an abnormality is present in which the washer fluid is not sprayed from the nozzle 12, easy and precise diagnosis of the abnormal operation for the not sprayed washer fluid can be made.

(Embodiment 3)

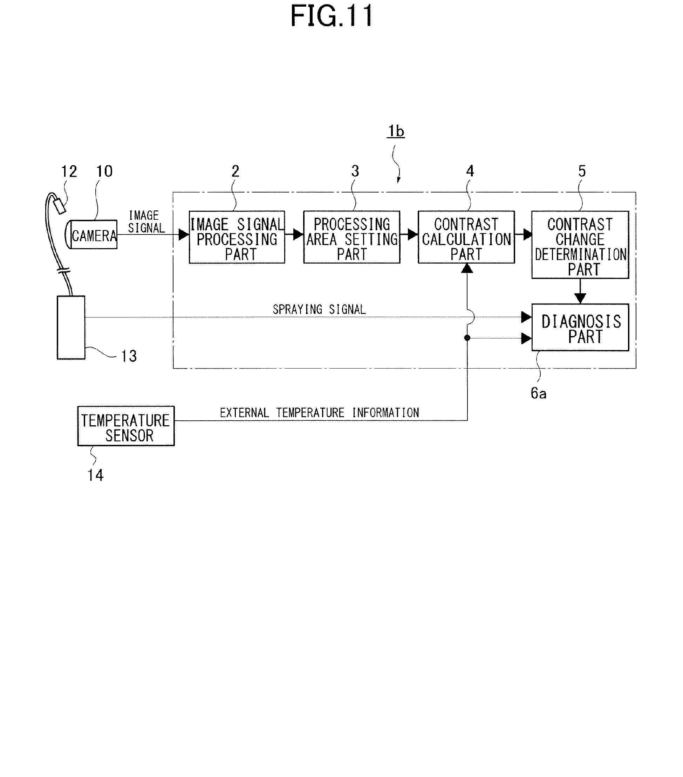

FIG. 11 is a block diagram that illustrates an approximate constitution of a diagnosis device which diagnoses a dirt removal device of a vehicle mounted camera according to Embodiment 3 of the present invention. In addition, same numerals are assigned to constituent parts with the same functions as the diagnosis device of embodiment 1 as illustrated in FIG. 1 and overlapping descriptions are hereby abbreviated.

As illustrated in FIG. 1, the diagnosis device 1 of the embodiment 3 includes an image signal processing part 2, a processing area setting part 3, a contrast calculation part (characteristic quantity extraction part) 4, a contrast changes determination part 5, and a diagnosis part 6. The constitutions of the image signal processing part 2, the processing area setting part 3, the contrast calculation part 4, the contrast changes determination part 5 are the same with embodiment 1.

The diagnosis part 6a, in the same way to Embodiment 1, when there is input of outputted spraying signal (operation signal) when the washer liquids are sprayed to the lens surface of the vehicle mounted camera (back camera) 10 by the dirt removal device of the vehicle mounted camera 13, if the degree of contrast changes determined by the contrast changes determination part 5 is above a predetermined threshold value, the dirt removal device of the vehicle mounted camera 13 is diagnosed (determined) to be normal state. Whereas if the degree of contrast changes determined by the contrast changes determination part 5 is below a predetermined threshold value, the dirt removal device of the vehicle mounted camera 13 is diagnosed (determined) to be abnormal (malfunctioning) state.

In addition, in the embodiment 3, as illustrated in FIG. 11, a temperature sensor 14 that measures outside temperature is disposed on a vehicle 11 (refer to FIG. 2) disposed with this diagnosis device 1b. Outside temperature information measured by the temperature sensor 14 is inputted to contrast calculation part (characteristic quantity extraction part) 4 and diagnosis part 6a of the diagnosis device 1b. Then the contrast calculation part 4 further sets a proper time series time of the average contrast calculated according to inputted outside temperature information. The diagnosis part 6a further sets a proper threshold value for determining changes of the average contrast according to inputted outside temperature information.

(Diagnosis processing actions of the diagnosis device)

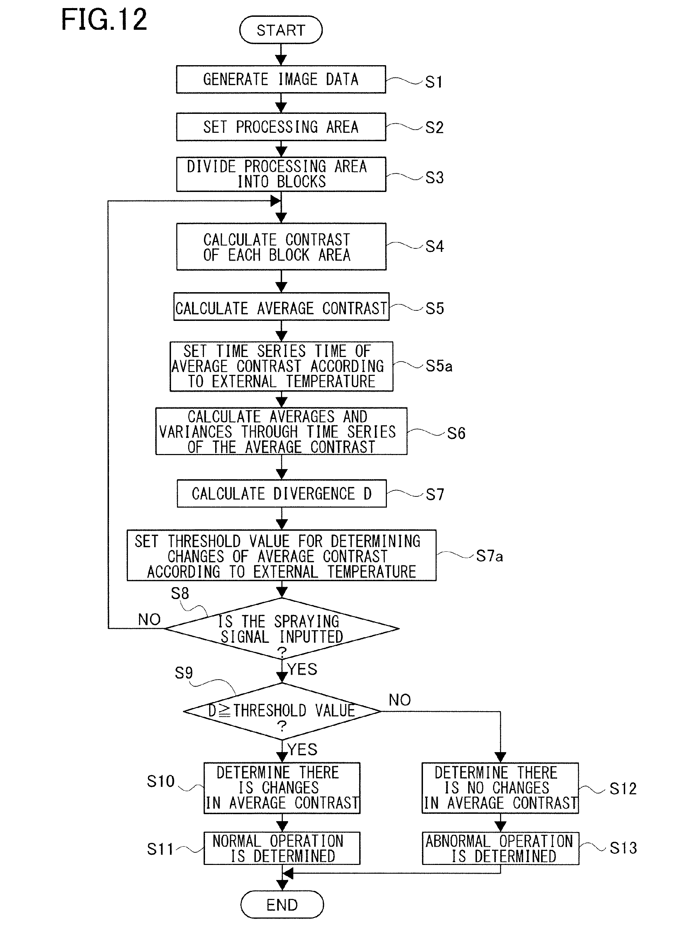

Next, diagnosis processing actions of the diagnosis device 1b of embodiment 3 is described with reference to the flow chart illustrated in FIG. 12.

Step S1 through S5 are the same as embodiment 1 as illustrated in FIG. 4. Then the contrast calculation part 4 set a proper time series time of the average contrast to be calculated out (step S5a) according to outside temperature information inputted from the temperature sensor 14.

That is, by outside temperature (environmental temperature) of the vehicle periphery, stickiness of the washer liquid sprayed out from the nozzle 12 of the dirt removal device of the vehicle mounted camera 13 is changed. For example, if outside temperature is low, stickiness of the washer liquid is heightened. Thereby deviations of washer liquid on the lens surface are generated etc. such that image variations (changes in contrast and changes in edge strength etc.) easily become big. Furthermore, flow speed of washer liquid passing through the lens surface is decreased. Continuing time of image changes become long.

On the contrary, in a reverse manner, if outside temperature is high, the washer liquid becomes easy to generate bubbles. Thereby spraying quantity is decreased such that image variations (changes in contrast and changes in edge strength etc.) easily become small. Furthermore, flow speed of washer liquid passing through the lens surface is increased. Continuing time of image changes becomes short.

Therefore, in order to make small the influences of outside temperature around vehicle periphery, in the case if outside temperature of the vehicle periphery is low, time series time of the average contrast calculated out is set longer. Whereas in the case if outside temperature of the vehicle periphery is high, time series time of the average contrast calculated out is set shorter.

In addition, step S6, S7 are the same as embodiment 1 as illustrated in FIG. 4. Then the diagnosis part 6, in correspondence to external temperature information inputted from the temperature sensor 14, sets a proper threshold value for determining changes of the average contrast (hereinbelow termed threshold value) (step S7a). In addition, this value for determining changes of the average contrast is used as the threshold value in step S9.

As described above, if outside temperature is low, flow speed of washer liquid passing through the lens surface is decreased. Image changes (contrast changes and edge strength changes etc.) grow large and furthermore, continuation time of image changes becomes long. If outside temperature is high, flow speed of washer liquid passing through the lens surface is increased. Image changes (contrast changes and edge strength changes etc.) grow small and furthermore, continuation time of image changes becomes short.

Therefore, in order to reduce influences of external temperature around the vehicle periphery, in the case external temperature around the vehicle periphery is low, setting is performed to lower this threshold value. In the case external temperature around the vehicle periphery is high, setting is performed to raise this threshold value.

In addition, step S8 through S13 are the same with the embodiment 1 illustrated in FIG. 4. In the embodiment 3, with regard to whether a value of divergence D of step S9 is above or below the preliminarily set threshold value, determination is made using the threshold value set in step S7a, the value of the divergence D calculated out is determined to be whether above or below this set threshold value.

In such a way, in the diagnosis device 1b that diagnoses a dirt removal device 13 for the vehicle camera in the embodiment 3, the contrast calculation part 4 sets a proper time series time of an average contrast calculated out according to inputted external temperature information. The diagnosis part 6a sets a threshold value according to inputted external temperature (a threshold value that determines proper changes in average contrast), such that more accurate diagnosis can be made.

In addition, in the above described embodiment 3, explanations are made based on the diagnosis device 1 of embodiment 1, but the same applications can be made to the diagnosis device 1a of embodiment 2. In such a case, in the flow chart illustrated in FIG. 8, after step S25, the edge strength calculation part (characteristic quantity extraction part) 4a sets a proper time series time of the average edge strength to be calculated out in correspondence to external temperature information inputted from the temperature sensor 14. Furthermore, after step S27, the diagnosis part 6a, in correspondence to external temperature information inputted from the temperature sensor 14, sets a threshold value for properly determining changes of the average edge strength.

(Embodiment 4)

FIG. 13 is a diagram that illustrates an approximate constitution of a vehicle system equipped with the above described diagnosis device according to embodiment 4 of the present invention. In addition, this vehicle system constitutes a diagnosis device 1 of embodiment 1 as illustrated in FIG. 1 (Of course, the diagnosis device can be the diagnosis device 1a of embodiment 2 or the diagnosis device 1b of embodiment 3)

As illustrated in FIG. 13, the diagnosis device 1 of this vehicle system 20 constitutes a vehicle mounted camera (back camera in the embodiment 4) 10 disposed on the vehicle, a dirt removal device 13 for the vehicle camera, a monitor device 15 that displays images photographed by the vehicle mounted camera 10 (for example, display panel of the navigation device), an alarm device 16 etc. that notifies the driver about malfunctions (abnormal operations) of the dirt removal device 13 for the vehicle camera.

In addition, the diagnosis device 1 constitutes a above described image signal processing part 2, a processing area setting part 3, a contrast calculation part 4, a contrast changes determination part 5, a diagnosis part 6, a control part 7 inputted with determination information outputted from the diagnosis part 6, an I/O part 8 electrically connected to each of the devices disposed on the vehicle (a vehicle mounted camera 10, a dirt removal device 13 for the vehicle camera, a monitor device 15, an alarm device 16, a temperature sensor 14 of embodiment 3) and a memory part 9 stored with programs etc. for commanding the above described diagnosis processing operation of the diagnosis device 1, the memory part also storing time series information etc. of the average contrast calculated by the contrast calculation part 4. Each of these parts of diagnosis device 1 is connected via a bus 21.

In addition, in the above described processing operation of the diagnosis device 1, in the case determination information of abnormal operation is outputted to the diagnosis part 6 from the control part 7, (that is, in the case washer liquids are not sprayed from the nozzle 12 of the a dirt removal device 13 for the vehicle camera and such abnormal operation are determined (diagnosed)), the control part 7 outputs operation stop signal to the dirt removal device 13 for the vehicle camera via the I/O part 8, a control to stop operation of the dirt removal device 13 for the vehicle camera is performed.

While simultaneously, the control part 7 outputs signals to the monitor device 15 and the alarm device 16 via the I/O part 8, the fact that operations of the dirt removal device 13 for the vehicle camera are stopped is notified to the driver on a display surface of the monitor device 15. The fact that operations of the dirt removal device 13 for the vehicle camera are stopped can also be notified to the driver by a speaker or alarm lamp as the alarm device 16.

In such a way, the vehicle system 20 of the embodiment 4 constitutes the diagnosis device 1 (or the diagnosis device 1a, 1b), during running of the vehicle (also including when the vehicle is stopped), when the dirt removal device 13 for the vehicle camera performs a spraying operation by washer fluids to the lens surface of the vehicle mounted camera, if an abnormality is present in which washer fluids are not sprayed from the nozzle 12, operations of the dirt removal device 13 for the vehicle camera can be immediately stopped.

Therefore, for example, if load is applied to the water spraying motor within the dirt removal device 13 for the vehicle camera, in the case the motor is burned due to heavy load, or when water is reversely flowed through the pipe conduit to wet the circuit board etc. of the dirt removal device 13 for the vehicle camera, or likewise circumstances generated or the like can be prevented preliminarily.

In addition, in each of the above described embodiments 1 through 4, the dirt removal device 13 for the vehicle camera sprays washer fluids to remove dirt on the lens surface of the vehicle mounted camera 10. But other than such a constitution, for example, a constitution can be adopted in which dirt on the lens surface of the vehicle mounted camera 10 is removed by spraying compressed air, another constitution can be adopted in which dirt on the lens surface of the vehicle mounted camera 10 is removed by electrically operating wiper blades. A dirt removal device for the vehicle camera can adopt such a constitution.

In addition, in each of the above embodiments 1 through 4, a back camera is used as an example of the vehicle mounted camera 10, but other than this, for example, a front camera disposed on a front face part of the vehicle or a side camera or the like disposed on both sides of the vehicle can also be applied in a same manner to the present invention.

Although the preferred embodiments have been described, it should be understood that the present invention is not limited to these embodiments, various modifications and changes can be made to these embodiments by those skilled in the art.

**Claims**

1. A diagnosis device (1, 1a, 1b) of a dirt removal device for removing dirt of a vehicle mounted camera, comprising:

   a characteristic quantity extraction part (4, 4a) that extracts a characteristic quantity of the image of a particular area photographed by the vehicle mounted camera (10);
   a change determination part (5, 5a) that determines a degree of changes through time series of the extracted characteristic quantity; and
   a diagnosis part (6, 6a) that diagnoses whether the dirt removal device of vehicle mounted camera is operating normally or abnormally, when the dirt removal device implements a dirt removal operation of the lens surface, based on whether operating signals outputted are inputted and whether the degree of changes of the characteristic quantity inputted from the changes determination part (5, 5a) is set to below or above a set threshold value.

2. The diagnosis device (1, 1a, 1b) of the dirt removal device for removing dirt of the vehicle mounted camera according to Claim 1, wherein in the case there is input of operating signals, and the degree of changes of the characteristic quantity inputted from the change determination part (5, 5a) are determined to be above the threshold value, the diagnosis part (6, 6a) diagnoses the dirt removal device (13) for the vehicle mounted camera (10) to be in normal operation, in the case there is input of operating signals, and the degree of changes of the characteristic quantity inputted from the change determination part (5, 5a) are determined to be below the threshold value, the diagnosis part (6, 6a) diagnoses the dirt removal device (13) for the vehicle mounted camera (10) to be in abnormal operation.

3. The diagnosis device (1, 1a, 1b) of the dirt removal device for removing dirt of the vehicle mounted camera according to Claim 1 or Claim 2, wherein the characteristic quantity of the particular image is contrast.

4. The diagnosis device (1, 1a, 1b) of the dirt removal device for removing dirt of the vehicle mounted camera according to Claim 1 or Claim 2, wherein the characteristic quantity of the particular image is edge strength.

5. The diagnosis device (1, 1a, 1b) of the dirt removal device for removing dirt of the vehicle mounted camera according to Claim 1 or Claim 2, wherein the particular area is a portion of the vehicle pictured in the image area.

6. The diagnosis device (1, 1a, 1b) of the dirt removal device for removing dirt of the vehicle mounted camera according to Claim 1 or Claim 2, wherein in correspondence to external temperature information of a temperature sensor (14) measuring external temperatures, the characteristic quantity extraction part (4, 4a) sets a proper times series time of the characteristic quantity.

7. The diagnosis device (1, 1a, 1b) of the dirt removal device for removing dirt of the vehicle mounted camera according to Claim 1 or Claim 2, wherein in correspondence to external temperature information of a temperature sensor (14) measuring external temperatures, the diagnosis part (6, 6a) set a proper threshold value used for determining whether the degree of changes of the characteristic quantity is above or below the threshold value.

8. The diagnosis device (1, 1a, 1b) of the dirt removal device for removing dirt of the vehicle mounted camera according to Claim 1 or Claim 2, further comprising:

a control part (7) to which diagnosis information from the diagnosis part (6, 6a) is inputted, wherein if the dirt removal device of the vehicle mounted camera is in abnormal operation by diagnosis information, the control part (7) outputs stop signals to the dirt removal device (13) of the vehicle mounted camera (10) to stop operations of the dirt removal device (13) of the vehicle mounted camera (10).

9. A diagnosis method that diagnoses if a dirt removal device for removing dirt of a vehicle mounted camera is in normal operation or not, comprising the steps of:

extracting a characteristic quantity of the image of a particular area photographed by the vehicle mounted camera (10), determining a degree of changes through time series of the extracted characteristic quantity, diagnosing operations of the dirt removal device (13) of vehicle mounted camera to be normal or abnormal, based on whether operating signals outputted are inputted and whether the degree of changes of the characteristic quantity inputted from the changes determination part (5, 5a) is set to below or above a threshold value, when the dirt removal device (13) implements a dirt removal operation of the lens surface.

10. The diagnosis method of the dirt removal device for removing dirt of the vehicle mounted camera according to Claim 9, wherein diagnosing the dirt removal device (13) for the vehicle mounted camera (10) to be in normal operation, in the case there is input of operating signals, and the degree of changes of the characteristic quantity inputted from the change determination part are determined to be above the set threshold value, diagnosing the dirt removal device (13) for the vehicle mounted camera (10) to be in abnormal operation, in the case there is input of operating signals, and the degree of changes of the characteristic quantity inputted from the change determination part are determined to be below the set threshold value.

11. The diagnosis method of the dirt removal device for removing dirt of the vehicle mounted camera according to Claim 9 or Claim 10, wherein the characteristic quantity of the particular image is contrast.

12. The diagnosis method of the dirt removal device for removing dirt of the vehicle mounted camera according to Claim 9 or Claim 10, wherein the characteristic quantity of the particular image is edge strength.

13. The diagnosis method of the dirt removal device for removing dirt of the vehicle mounted camera according to Claim 9 or Claim 10, wherein the particular area is a portion of the vehicle pictured in the image area.

14. The diagnosis method of the dirt removal device for removing dirt of the vehicle mounted camera according to Claim 9 or Claim 10, further comprising a step of:

outputting stop signals by stop control to the dirt removal device (13) of the vehicle mounted camera (10), stopping its operations by stop control, wherein the stop control step is implemented when diagnosis information is inputted from the diagnosis step in which abnormal operations are present to the dirt removal device (13) of the vehicle mounted camera (10).

15. A vehicle mounted system (20), comprising:

a vehicle mounted camera (10), a dirt removal device (13) of the vehicle mounted camera (10) removing dirt of the lens surface of the vehicle mounted camera (10),

a diagnosis device according to Claim 1 or Claim 2 that diagnoses whether normal operations are maintained to the dirt removal device (13) of the vehicle mounted camera (10), further including a control part (7) to which diagnosis information from the diagnosis part (6, 6a) of the diagnosis device (1, 1a, 1b) is inputted, wherein

if the dirt removal device (13) of the vehicle mounted camera (10) is in abnormal operation by diagnosis information inputted, the control part outputs stop signals to the dirt removal device (13) of the vehicle mounted camera (10) to stop operations of the dirt removal device (13) of the vehicle mounted camera (10).

# FIG.1

| CAMERA | IMAGE SIGNAL | IMAGE SIGNAL PROCESSING PART | PROCESSING AREA SETTING PART | CONTRAST CALCULATION PART | CONTRAST CHANGES DETERMINATION PART |

SPRAYING SIGNAL

DIAGNOSIS PART

# FIG.2

# FIG.3A

# FIG.3B

EP 2 682 315 A1

# FIG.4

START

GENERATE IMAGE DATA — S1

SET PROCESSING AREA — S2

DIVIDE PROCESSING AREA INTO BLOCKS — S3

CALCULATE CONTRAST OF EACH BLOCK AREA — S4

CALCULATE AVERAGE CONTRAST — S5

CALCULATE AVERAGES AND VARIANCES THROUGH TIME SERIES OF THE AVERAGE CONTRAST — S6

CALCULATE DIVERGENCE D — S7

S8 — IS THE SPRAYING SIGNAL INPUTTED ? — NO

YES

S9 — $D \geqq$ THRESHOLD VALUE ? — NO

S10 — YES

DETERMINE THERE IS CHANGES IN AVERAGE CONTRAST

S12 — DETERMINE THERE IS NO CHANGES IN AVERAGE CONTRAST

S11 — NORMAL OPERATION IS DETERMINED

S13 — ABNORMAL OPERATION IS DETERMINED

END

## FIG.5A

AVERAGE CONTRAST

PAST SERIES | PRESENT SERIES

t1

TIME

## FIG.5B

$\sigma_p$

$\mu_p$

D

$\mu_c$

$\sigma_c$

## FIG.6

AVERAGE CONTRAST

PAST SERIES | PRESENT SERIES

t1

TIME

# FIG.7

# FIG.8

START

GENERATE IMAGE DATA — S21

SET PROCESSING AREA — S22

DIVIDE PROCESSING AREA INTO BLOCKS — S23

CALCULATES EDGE STRENGTH OF EACH BLOCK AREA — S24

CALCULATE AVERAGE EDGE STRENGTH — S25

CALCULATE AVERAGES AND VARIANCES THROUGH TIME SERIES OF THE AVERAGE EDGE STRENGTH — S26

CALCULATTES DIVERGENCE D — S27

S28 — IS THE SPRAYING SIGNAL INPUTTED? — NO

YES

S29 — $D \geqq$ THRESHOLD VALUE ? — NO

YES

S30 — DETERMINE THERE IS CHANGES IN AVERAGE EDGE STRENGTH

S32 — DETERMINE THERE IS NO CHANGE IN AVERAGE EDGE STRENGTH

S31 — NORMAL OPERATION IS DETERMINED

S33 — ABNORMAL OPERATION IS DETERMINED

END

# FIG.9A

## FIG.9B

# FIG.10

# FIG.11

EP 2 682 315 A1

## FIG.12

```
              ┌─────────┐
              │  START  │
              └────┬────┘
                   ▼
      ┌──────────────────────────┐
      │   GENERATE IMAGE DATA     │──── S1
      └────────────┬─────────────┘
                   ▼
      ┌──────────────────────────┐
      │    SET PROCESSING AREA    │──── S2
      └────────────┬─────────────┘
                   ▼
      ┌──────────────────────────┐
      │   DIVIDE PROCESSING AREA  │──── S3
      │        INTO BLOCKS        │
      └────────────┬─────────────┘
                   ▼
      ┌──────────────────────────┐
      │    CALCULATE CONTRAST     │──── S4
      │     OF EACH BLOCK AREA    │
      └────────────┬─────────────┘
                   ▼
      ┌──────────────────────────┐
      │  CALCULATE AVERAGE CONTRAST│──── S5
      └────────────┬─────────────┘
                   ▼
      ┌──────────────────────────┐
      │   SET TIME SERIES TIME OF │──── S5a
      │ AVERAGE CONTRAST ACCORDING│
      │    TO EXTERNAL TEMPERATURE│
      └────────────┬─────────────┘
                   ▼
      ┌──────────────────────────┐
      │   CALCULATE AVERAGES AND  │──── S6
      │ VARIANCES THROUGH TIME SERIES│
      │   OF THE AVERAGE CONTRAST │
      └────────────┬─────────────┘
                   ▼
      ┌──────────────────────────┐
      │   CALCULATE DIVERGENCE D  │──── S7
      └────────────┬─────────────┘
                   ▼
      ┌──────────────────────────────────┐
      │ SET THRESHOLD VALUE FOR DETERMINING│──── S7a
      │  CHANGES OF AVERAGE CONTRAST      │
      │ ACCORDING TO EXTERNAL TEMPERATURE │
      └────────────┬─────────────────────┘
```

S8

NO ◄── IS THE SPRAYING SIGNAL INPUTTED ?

YES

S9

D ≥ THRESHOLD VALUE ? ──NO──►

YES

S10 — DETERMINE THERE IS CHANGES IN AVERAGE CONTRAST

S12 — DETERMINE THERE IS NO CHANGES IN AVERAGE CONTRAST

S11 — NORMAL OPERATION IS DETERMINED

S13 — ABNORMAL OPERATION IS DETERMINED

END

# FIG.13

Europäisches
Patentamt

European
Patent Office

Office européen
des brevets

# EUROPEAN SEARCH REPORT

Application Number

EP 13 17 4750

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 6 097 024 A (STAM JOSEPH S [US] ET AL)<br>1 August 2000 (2000-08-01)<br>* abstract *<br>* figures 1-6 *<br>* column 2, line 4 - line 12 *<br>* column 6, line 8 - column 10, line 2 *<br>----- | 1-6,8-15<br><br>7 | INV.<br>B60S1/08<br>H04N5/357<br>H04N5/14<br>H04N5/225 |
| X<br>A | US 2011/073142 A1 (HATTORI TOSHIHIRO [JP] ET AL) 31 March 2011 (2011-03-31)<br>* abstract *<br>* paragraph [0002] *<br>* paragraph [0073] - paragraph [0077] *<br>* paragraph [0107] - paragraph [0113] *<br>* figures 1A-54 *<br>----- | 1,6,8,9,<br>14,15<br>2-5,7,<br>10-13 | |
| A | JP 2007 053448 A (FUJIFILM CORP)<br>1 March 2007 (2007-03-01)<br>* abstract; figures 1-13 *<br>----- | 1-15 | |

| | |
|---|---|
| | TECHNICAL FIELDS SEARCHED (IPC) |
| | B60S<br>H04N<br>G06T<br>B60R<br>G06K |

The present search report has been drawn up for all claims

| Place of search | Date of completion of the search | Examiner |
|---|---|---|
| Munich | 30 October 2013 | Tessens, Linda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 17 4750

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2013

| Patent document cited in search report | | Publication date | Patent family member(s) | | Publication date |
|---|---|---|---|---|---|
| US 6097024 | A | 01-08-2000 | AT | 247010 T | 15-08-2003 |
| | | | AT | 332256 T | 15-07-2006 |
| | | | AU | 9313598 A | 05-04-1999 |
| | | | CA | 2301303 A1 | 25-03-1999 |
| | | | CN | 1270560 A | 18-10-2000 |
| | | | DE | 69817197 D1 | 18-09-2003 |
| | | | DE | 69817197 T2 | 09-06-2004 |
| | | | DE | 69835175 T2 | 31-05-2007 |
| | | | EP | 1015286 A1 | 05-07-2000 |
| | | | EP | 1334888 A1 | 13-08-2003 |
| | | | ES | 2205547 T3 | 01-05-2004 |
| | | | JP | 4226775 B2 | 18-02-2009 |
| | | | JP | 2001516670 A | 02-10-2001 |
| | | | JP | 2004212404 A | 29-07-2004 |
| | | | KR | 20050046749 A | 18-05-2005 |
| | | | US | 5923027 A | 13-07-1999 |
| | | | US | 6097024 A | 01-08-2000 |
| | | | US | 6262410 B1 | 17-07-2001 |
| | | | US | 6495815 B1 | 17-12-2002 |
| | | | US | 2004000631 A1 | 01-01-2004 |
| | | | US | 2004046103 A1 | 11-03-2004 |
| | | | US | 2005098712 A1 | 12-05-2005 |
| | | | US | 2006065821 A1 | 30-03-2006 |
| | | | US | 2007194208 A1 | 23-08-2007 |
| | | | WO | 9914088 A1 | 25-03-1999 |
| US 2011073142 | A1 | 31-03-2011 | CN | 102029976 A | 27-04-2011 |
| | | | DE | 102010041475 A1 | 16-06-2011 |
| | | | JP | 5056919 B2 | 24-10-2012 |
| | | | JP | 2011244417 A | 01-12-2011 |
| | | | SE | 1051002 A1 | 30-03-2011 |
| | | | US | 2011073142 A1 | 31-03-2011 |
| JP 2007053448 | A | 01-03-2007 | NONE | | |

EPO FORM P0459

For more details about this annex : see Official Journal of the European Patent Office, No. 12/82

**EP 2 682 315 A1**

**Patent documents cited in the description**

- JP 2001171491 A